# EUROPEAN PATENT APPLICATION

(11) **EP 3 817 329 A1**
(43) Date of publication of application: **05.05.2021**
(21) Application number: 20204469.9
(22) Date of filing: 28.10.2020
(51) Int. Cl.: H04L 29/06

(54) **METHOD AND SYSTEM FOR IDENTIFIED COMMUNICATIONS**

(30) Priority: 29.10.2019 NL 2024116
(71) Applicant: Sancoo B.V., 2341 GB Oegstgeest (NL)
(72) Inventor: Blom, Alexander Jeroen, 2341 GB OEGSTGEEST (NL)
(74) Representative: Arnold & Siedsma

(57) **Abstract**

Disclosed are a method, system, electronic devices, and a computer program product for verifying that a first and a second communication session are both between the same first electronic device and a second electronic device, wherein the first communication session is an internet communication session. The method may comprise transmitting, by the first electronic device in the first communication session, identification information for identifying the first electronic device to the second electronic device; transmitting, by the second electronic device to the first electronic device in the first communication session, of an identifier or token for identifying the first electronic device over the second communication session; and using, by the first electronic device, of the identifier or token in the second communication session within a predetermined time period after receipt of the identifier or token such that the second electronic device is enabled to verify that the second electronic device is connected to the first electronic device in the second communication session.

## Description

The present patent disclosure concerns a method, system, electronic device, and computer program product for verifying that a first and a second communication session are both a communication session between the same first electronic device and a second electronic device.

In communication between people, viz. natural persons, with various organisations such as government agencies that is not face-to-face, the organisation often has a need to verify the identity of the natural person contacting the organisation or at least to verify the electronic device that that natural person (the user) is using to contact that organisation. For instance, the user may be transmitting information to the organisation using the internet in a first communication session, and thereafter contacts the organisation in a second communication session such as a telephone call to discuss some subject based on the transmitted information. The organisation then wishes to verify that the user who, or at least the user's electronic device that, transmitted the information is the same as the person making that telephone call. This verification is usually done by asking several questions to the user and confirm the identity of the user once all or sufficient questions have been answered correctly. It will be understood that this way of identifying the user is insecure, since the information can be available to another person than the user.

US 2014/057596 A1 describes a method and a system for correlating multiple sessions to a single client device by means of a temporary or permanent identifier.

US 2009/055899 A1 and US 2007/196096 A1 are additional prior art examples.

It is an object, among objects, of the present patent disclosure to provide a way of verifying that the same device of the user is used in two or more communication sessions.

According to an aspect, there is provided a method for verifying that a first and a second communication session are both a communication session between the same first electronic device and a second electronic device, wherein the first communication session is a data communication session, preferably via the internet, the method comprising:
- transmitting, by the first electronic device in the first communication session, identification information for identifying the first electronic device to the second electronic device;
- receiving, by the second electronic device in the first communication session, of the transmitted identification information;
- transmitting, by the second electronic device to the first electronic device in the first communication session, of an identifier or token for identifying the first electronic device over the second communication session;
- receiving, by the first electronic device, of the identifier or token; and
- using, by the first electronic device, of the identifier or token in the second communication session such that the second electronic device is enabled to verify that the second electronic device is connected to the first electronic device in the second communication session.

With the present method, the second electronic device is enabled to verify that the first electronic device to which it is connected in the first communication session is the same one as in the first communication session, since the first electronic device uses the identifier or token from the second electronic device in the second communication session.

It is preferred that the second electronic device only verifies that the second electronic device is connected to the first electronic device in the second communication session when the first electronic device uses the identifier or token within a predetermined time period after the second electronic device has transmitted the identifier or token to the first electronic device.

This preferred configuration increases security, since there is a much lower chance that the identifier or token is obtained (e.g. stolen) by another user and/or another electronic device. Also, there is less chance that the first electronic device is used by an unauthorized user who obtained the first electronic device after the identifier or token is received in the first communication session and before the devices connect in the second communication session.

The second electronic device can be a computer system in control of one entity/organisation, for instance a computer system of a municipality or of a call centre of a municipality or some other entity.

The identity information for identifying the electronic device can be identity information associated with a user or owner of the electronic device. The identity information preferably comprises information associated with the user that is issued by an issuing party such as a government agency. An example of the identity information is a personal identity number such as the Dutch "burgerservicenummer", BSN, issued by the government. Further examples comprise a passport number of a passport of the user, a birthdate or age of the user, a nationality of the user, an address of the user, categories of income of the user, and/or registered names of the user.

The identifier or token for identifying the first electronic device can be an identifier or token that allows the second electronic device to retrieve the identification information. The identifier can be a random value, generated by the second electronic device just for this session, or an already existing value corresponding to the session such as an IP-address, or corresponding to the first electronic device and verified as such in an earlier session especially for this purpose, such as a telephone number of the first electronic device, its MAC address etc.

The using, by the first electronic device, of the identifier or token in the second communication session can be done such that the second electronic device is enabled to verify that the second electronic device is connected to the first electronic device in the second communication session and not to another electronic device. One way to use the identifier or token is to transmit the token to the second electronic device in the second communication session.

Preferably, the transmitting, by the second electronic device to the first electronic device in the first communication session comprises transmitting address data of the second electronic device to the first electronic device, wherein the address data is configured to allow the first electronic device to initiate the second communication session with the second electronic device, the method further comprising initiating, by the first electronic device, the second communication session using the address data.

The method may include a step of providing, by the second electronic device, of address or contact information for allowing the first electronic device to connect to the second communication device in the first communication session.

The identifier or token may be or comprise the address data. The second communication may be reachable for the second communication session via more than one address such as a telephone number or an IP address (optionally also including a selected port). This allows the second communication to distinguish the first electronic device from at least one other device trying to contact the second electronic device.

It is noted in general that the second electronic device of the second communication session can be different from the second electronic device of the first communication session, as long as both of these devices are under the control of the same entity/organisation such as a government and can share the required information (e.g. the identifier or token and the identification information). A computer system can comprises these two second electronic devices.

The method may be implemented such that the second communication session is a telephone communication session, wherein the address data is a first telephone number for reaching the second electronic device, wherein the first electronic device initiates the second communication session using the first telephone number for reaching the second electronic device.

In this way a security layer is provided for knowing that the first electronic device is the same device as was connected in the first communication session. The identifier or token may thus be or comprise the first telephone number. Then, using the telephone number with which the first electronic device contacts the second electronic device, the identity information may be retrieved.

In general, the second electronic device stores the identifier or token in such a way that it allows the associated identity information of the first electronic device to be retrieved.

The second electronic device may the first telephone number from a plurality of telephone numbers such that the first telephone number is assigned to only the first electronic device. IF the second electronic device for instance is known to connect in the communication sessions to a maximum number of 100 first electronic devices within a certain time period (e.g. an hour or a day), then for instance a selection of the first telephone number from at least 5000 or 10000 telephone numbers should be enough to distinguish the first electronic device from the other devices while at the same time lowering the chance sufficiently that errors in the telephone number used by the various electronic devices to connect to the second electronic device result in the wrong device connecting to the second electronic device e.g. within the predetermined time period.

It is an option that the identification information comprises a second telephone number of the first electronic device, wherein the first electronic device initiates the second communication session using the second telephone number. This provides another security layer for confirming that the same first electronic device is communicating with the second electronic device in the second communication session.

Preferably the second electronic device only allows the second communication session to be established when the second telephone number used in the second communication session matches the second telephone number of the received identification information.

The method may be implemented such that the second telephone number is a verified telephone number that is preferably verified by the second electronic device using short message service, SMS, verification.

The predetermined time period after the second electronic device has transmitted the identifier or token to the first electronic device may be at most 2 minutes, preferably 1 minute.

Optionally, the identity information comprises a personal identity number of a user of the first electronic device, wherein the personal identity number is issued by a government agency, the method comprising receiving, by the first electronic device, of the personal identity number from a third electronic device in a third communication session, wherein the third electronic device is associated with and/or controlled by the government agency.

It is preferred that the identifier or token comprises a code portion selected by the second electronic device, wherein the code portion is selected such that the first electronic device is identifiable by the code portion, wherein the using, by the first electronic device, of the identifier or token in the second communication session comprises transmitting the code portion to the second electronic device.

In a method wherein the second communication session is a session by telephone, the code portion may be comprised of DTMF keypad values or the first electronic device may convert the code portion to DTM keypad values. The first electronic device may use the identifier or token by transmitting the code portion to the second electronic device as DTMF tones. The DTMF keypad values may for example include at least one of a numerical value, a star, "*", and a number sign, "#", or any combination thereof.

For instance, the DTMF keypad values can comprise at least six keypad values which are transmitted by the first electronic device to the second electronic device in the second communication session within a predefined time period of at most 10 seconds, preferably at most 5 seconds.

In one implementation of the method, the method comprises obtaining, by the second electronic device in the second communication session, of the used identifier or token; comparing the used identifier or token with the identifier or token transmitted to the first electronic device in the first communication session; and when the received identifier or token is identical to the identifier or token transmitted to the first electronic device in the first communication session, verifying that the first electronic device is the same as the first electronic device.

Preferably, the using, by the first electronic device, of the identifier or token in the second communication session comprises transmitting the identifier or token to the second electronic device, wherein the obtaining comprises receiving, by the second electronic device in the second communication session, of the transmitted identifier or token.

In an implementation of the method, the method further comprises transmitting, by the first electronic device in the second communication session, of the identification information for identifying the first electronic device to the second electronic device.

Alternatively or additionally to the above method steps, the method may further comprise, before the step of transmitting the identifier or token in the second communication session, transmitting a connection request to the second electronic device for establishing the second communication session between the first and second electronic devices.

It will be understood from the above description of implementations (or configurations) that the first electronic device is preferably a mobile device. The mobile device is preferably a mobile phone such as a smart phone.

Alternatively or additionally, in the first communication session a first protocol and a first transport layer are used, wherein in the second communication session a second protocol and a second transport layer are used, wherein the first protocol is different from the second protocol and/or the first transport layer is different from the second transport layer. Preferably, the first transport layer is a TCP or UDP transport layer; and/or the first protocol is a TCP or UDP protocol, and wherein the second protocol is a dual-tone multi-frequency, DTMF, protocol.

In one implementation of the method, the first communication session is a UDP or TCP based communication session.

In an alternative or additional implementation of the method, the second communication session is a chat session, wherein preferably the second communication session uses a protocol that is, or is based on, the extensible messaging and presence protocol, XMPP.

When the second communication session is a chat session, it is preferred that the second electronic device acts as a chat server. One way such a chat implementation may be configured is that the first electronic device initiates the first communication session based on connection data obtained from the second communication device, e.g. via a website that may show a link or QR code or the like. Thereafter the second communication session may be started. It is also an option that the first electronic device first attempts to initiate the second communication session, and in case the first communication session has not yet been done or completed, which means that no identity information is transferred to the second communication device, the second communication device may then request the first electronic device to initiate the first communication session before continuing the second communication session. This request may be implemented in various ways, such as by using a QR-code for initiating the first communication session.

According to another aspect, there is provided a system for verifying that a first and a second communication session are both a communication session between the same first electronic device and a second electronic device, wherein the first communication session is a data communication session via the internet, the system comprising the first electronic device and the second electronic device, wherein: the first electronic device is configured to transmit, in the first communication session, identification information for identifying the first electronic device to the second electronic device; the second electronic device is configured to receive, in the first communication session, the transmitted identification information, and in response thereto transmit, to the first electronic device in the first communication session, an identifier or token for identifying the first electronic device over the second communication session; and the first electronic device is further configured to receive the identifier or token, and to use the received identifier or token in the second communication session such that the second electronic device is enabled to verify that the second electronic device is connected to the first electronic device in the second communication session, wherein the second electronic device only verifies that that the second electronic device is connected to the first electronic device in the second communication session when the first electronic device uses the identifier or token within a predetermined time period after the second electronic device has transmitted the identifier or token to the first electronic device.

According to another aspect, there is provided a system configured to implement the method as described above.

In a further aspect, there is provided an electronic device configured to communicate with a second electronic device via a first and a second communication session, wherein the first communication session is a data communication session via the internet, the electronic device comprising: at least one communication interface configured to communicate in the first communication session and the second communication session; a memory configured to store identification information for identifying the electronic device and an identifier or token for identifying the electronic device over the second communication session; a processor configured to transmit, via the first communication interface, identification information for identifying the first electronic device to the second electronic device, to receive, via the first communication interface, the identifier or token from the second electronic device; and to use the identifier or token in the second communication session such that the second electronic device is enabled to verify that the second electronic device is connected to the first electronic device in the second communication session, wherein the first electronic device is configured to only use the identifier or token in the second communication session within a predetermined time period after receipt of the identifier or token from the second electronic device.

In yet another aspect, there is provided an electronic device configured to communicate with a first electronic device via a first and a second communication session, wherein the electronic device is a second electronic device, wherein the first communication session is a data communication session via the internet, the electronic device comprising: at least one communication interface configured to communicate in the first communication session and the second communication session; a memory configured to store identification information for identifying the first electronic device and an identifier or token for identifying the first electronic device over the second communication session; a processor configured to: receive, via the first communication interface from the first electronic device, the transmitted identification information; to transmit, via the first communication interface to the first electronic device, an identifier or token for identifying the first electronic device over the second communication session; and to obtain, via the second communication interface, the identifier or token from the first electronic device such that that the second electronic device is enabled to verify that the second electronic device is connected to the first electronic device in the second communication session, wherein the second electronic device is configured to only verify that the second electronic device is connected to the first electronic device in the second communication session when the identifier or token is obtained within a predetermined time period after transmission of the identifier or token to the first electronic device.

A related aspect concerns a system comprising a first electronic device and a second electronic device, the first electronic device being the electronic device according to one of the two aspects concerning electronic devices and the second electronic device being the other one of the two aspects concerning the electronic devices.

In one more aspect there is provided a computer program product comprising computer-executable instructions for performing, when executed on a computer, the steps of any of the method(s) and/or steps described above.

It will be understood that the various aspects and implementations thereof are compatible with each other and that implementations of one aspect such as the method may be used in the other aspects such as the systems or electronic device. In addition, it will be apparent that advantages and effects of the various implementations also apply to corresponding implementations of the other aspects.

The accompanying drawings are used to illustrate presently preferred non-limiting exemplary embodiments of devices of the present disclosure. The above and other advantages of the features and objects of the disclosure will become more apparent and the aspects and embodiments will be better understood from the following detailed description when read in conjunction with the accompanying drawings, in which:
Fig. 1 is a schematic flow chart of an implementation of a method according to the present disclosure;
Fig. 2 is a schematic flow chart of another implementation of the method according to the present disclosure;
Fig. 3 is a graphical example of a website used for allowing the first electronic device to initiate the first communication session in the method of Fig. 2;
Fig. 4 is an example of a graphical user interface of an app executed on the first electronic device used in the method of Fig. 2;
Fig. 5 is another example of a graphical user interface of an app executed on the first electronic device used in the method of Fig. 2;
Fig. 6 is yet another example of a graphical user interface of an app executed on the first electronic device used in the method of Fig. 2;
Fig. 7 is schematic drawing of an implementation of a method according to the present disclosure, wherein the first electronic device obtains identity information from a third electronic device;
Fig. 8 is schematic drawing of an implementation of a method according to the present disclosure, wherein the first electronic device shares identity information with the second electronic device; and
Fig. 9 is a schematic drawing of an implementation of a system according to the present disclosure.

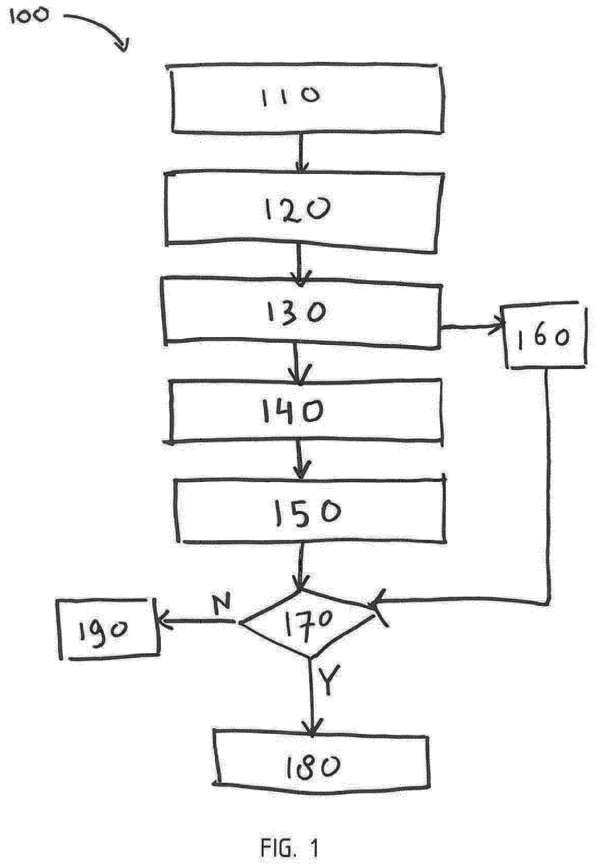

In Fig. 1 there is shown a method 100 for verifying that a first and a second communication session are both a communication session between the same first electronic device and a second electronic device, wherein the first communication session is a data communication session via the internet, the method 100 comprising:
- transmitting 110, by the first electronic device in the first communication session, identification information for identifying the first electronic device to the second electronic device;
- receiving 120, by the second electronic device in the first communication session, of the transmitted identification information;
- transmitting 130, by the second electronic device to the first electronic device in the first communication session, of an identifier or token for identifying the first electronic device over the second communication session;
- receiving 140, by the first electronic device, of the identifier or token; and
- using 150, by the first electronic device, of the identifier or token in the second communication session such that the second electronic device is enabled to verify that the second electronic device is connected to the first electronic device in the second communication session.

Optionally, the second electronic device only verifies 180 that the second electronic device is connected to the first electronic device in the second communication session when the first electronic device uses the identifier or token within a predetermined time period after the second electronic device has transmitted the identifier or token to the first electronic device. To this end, a timer is started 160 for instance after the transmitting 130. Another option is that there is an application on the first electronic device that keeps track of the time period between the receiving step 140 and the using step 150. If the time period is exceeded, the method stops in step 190 and the second communication session is terminated.

The transmitting step 130, by the second electronic device to the first electronic device in the first communication session may comprise transmitting address data of the second electronic device to the first electronic device, wherein the address data is configured to allow the first electronic device to initiate the second communication session with the second electronic device. The method then comprises initiating, by the first electronic device, the second communication session using the address data.

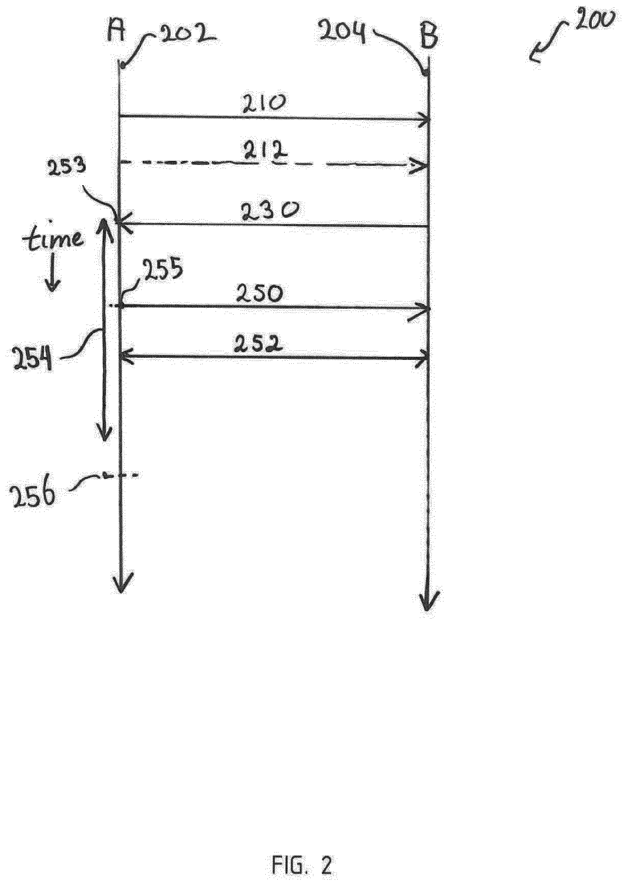

A preferred implementation of the method is shown in Fig. 2 as the method 200. Herein, the first electronic device 202 of party A (e.g. the user of the device) and the second electronic device 204 of party B (e.g. a municipality or a call centre thereof) perform various steps in both the first and second communication sessions. In method 200, the second communication session is a telephone communication session. The first electronic device 202 is a mobile phone in this example. In step 210, the first electronic device 202 transmits the personal identity number of the user of the device 202 to the second electronic device 204. The personal identity number is an example of the identification information, and is merely used as an example; it will be understood that various other data about the device 202 or the user thereof are of interest, depending on the role of the party B.

Optionally, the first electronic device 202 also transmits 212 its verified telephone number, an example of the second telephone number, to the second electronic device 204. The verified telephone number of the first electronic device 202 is preferably verified by the second electronic device 204 using short message service, SMS, verification. In method 200, it is thus possible that the identification information comprises a second telephone number of the first electronic device.

The first electronic device receives 230 a contact telephone number, being an example of the first telephone number, from the second electronic device. This contact telephone number is selected from a plurality of telephone numbers such that the first telephone number is assigned to only the first electronic device.

The first electronic device 202 initiates 250 the second communication session using its telephone number, preferably the verified telephone number transmitted in step 212 to the second electronic device 204. Since the first electronic device uses the selected contact telephone number in step 250, the second electronic device knows which device is calling and can retrieve data including the received identification information corresponding to the first electronic device 202. The second electronic device 204 only allows the second communication session to be established when the telephone number used by the first electronic device 202 to initiate 250 the second communication session matches the telephone number received in step 212.

In addition, the call initiated in step 250 is only answered by the second electronic device 204 if the time period between step 230 and step 250 is smaller than the predetermined time period 254, which is at most 2 minutes, preferably 1 minute. In Fig. 2, the step 230 was performed at time 253, and the step 250 at time 255. The time between these points is smaller than the predetermined time period 254. If a call would be initiated by the first electronic device only at time 256, then the second electronic device 204 would refuse the call.

Another option is that there is an application on the first electronic device 202 that keeps track of the time between receipt of the contact telephone number in step 230, or any other step, and keeps track of the time and only allows to perform the step 250 of initiating when the time 255 is within the corresponding predetermined time period 253.

When the call is excepted, a person working for party B, e.g. an civil servant of the local municipality, can then be sure that the personal identity number received in step 210 is the personal identity number of the user of the first electronic device.

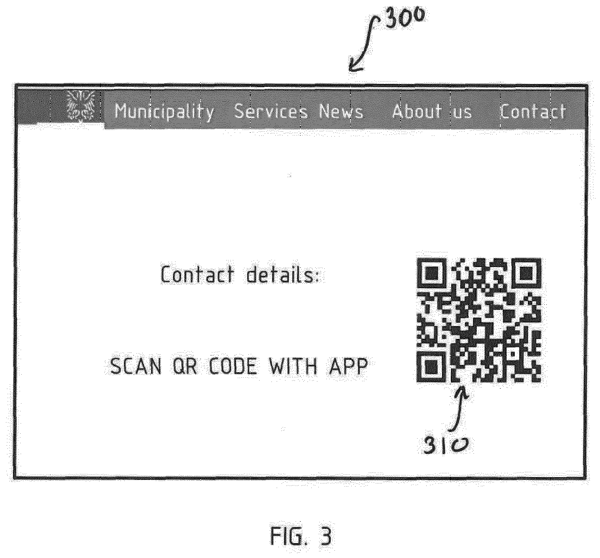

In Fig. 3 there is shown an example of a page 300 of a website of party B that may be provided for access through the internet by the second electronic device 204 or on a computer system or device that is in communication with the second electronic device. The page 300 comprises the QR-code 310 which can used by the first electronic device to connect to the second electronic device in the first communication session to share the identification information with the second electronic device. The QR-code is an example of the address or contact information described above.

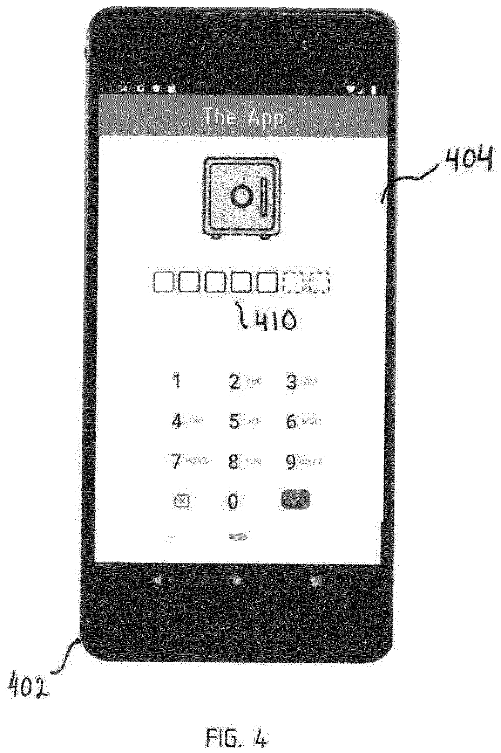

As an example, the QR-code allows an application with a graphical user interface (GUI) of the first electronic device 402 (see Fig. 4) to share identification information stored on the first electronic device to be shared with the second electronic device. Here the identification information is stored preferably encrypted and requires a passcode 410 shown in screen configuration 404 to be entered before the information can be accessed and shared with the second electronic device.

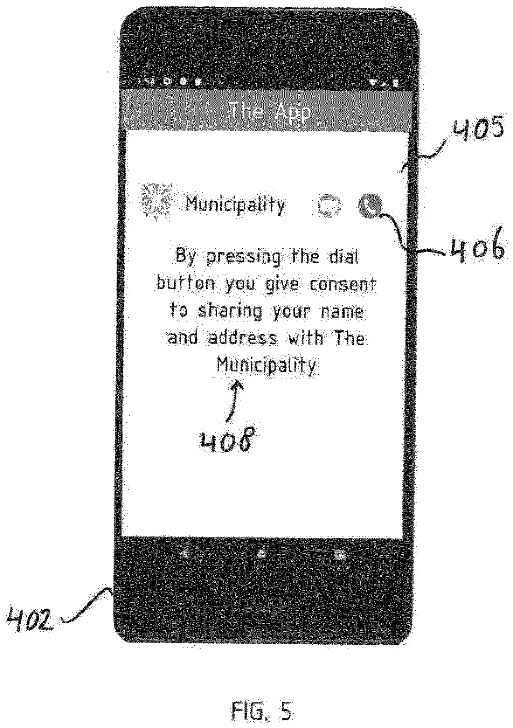

After the passcode is entered, the GUI 404 in this application shows a new screen configuration 405 as shown in Fig. 5. The screen configuration has a "dial" button 406 that directly dials the received contact telephone number, for instance as described in relation to Fig. 2 above, to contact the second communication device. It is also possible that the "dial" button 406 starts the sharing of identification information process and only thereafter the contact telephone number is received from the second communication device, to clarify to the user that confidential data is shared with another device/party, the warning message 408 may be shown on the screen configuration 405.

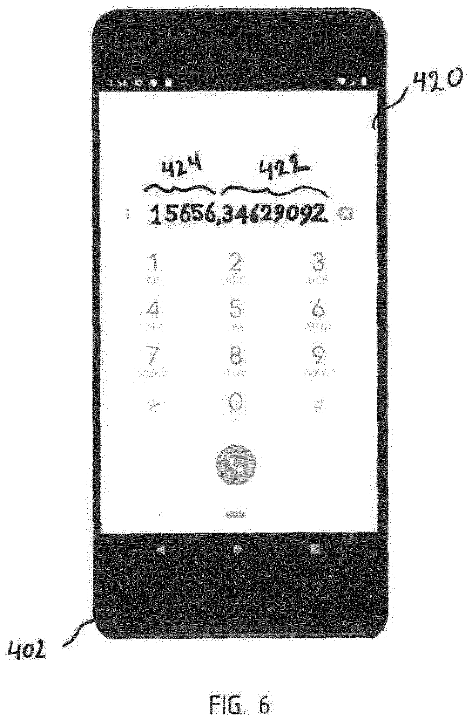

Additionally or alternatively, the first electronic device may convert the identifier or token received from the second electronic device to a DTMF code transmitted upon dialing the contact telephone number 424. In Fig. 6 the DTMF code 422 is shown in screen configuration 420 of the application run in the first electronic device 402. The DTMF code 422 is entered directly after the contact telephone number 424, of which only a final part is shown. The DTMF code is an example of the code portion selected by the second electronic device.

Whenever possible, the various communication sessions between devices are preferably encrypted, such as using the Hypertext Transfer Protocol Secure (HTTPS). Also the various stored data such as the identification information and/or the identifier or token are stored in an encrypted way.

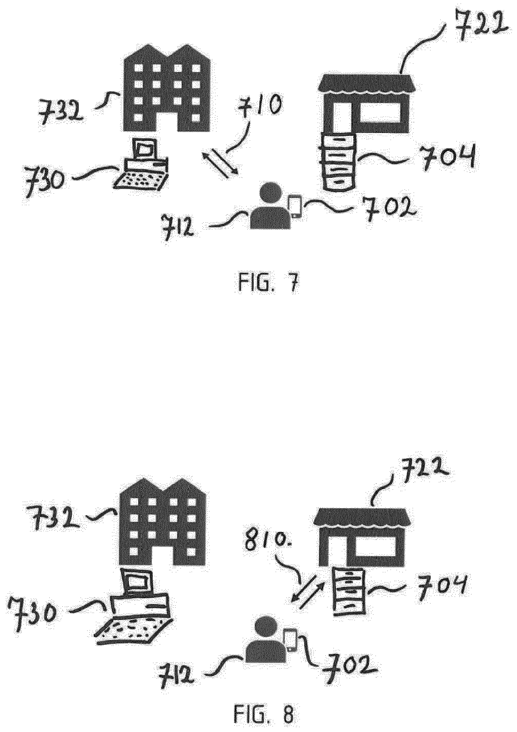

Fig. 7 shows an example of obtaining (Fig. 7) information by the first electronic device 702 from a third party 732 for use in the various methods, systems and devices described herein. The first electronic device 702 can be the first electronic device 202 or 402. The third party 732 can be the municipality, which controls a third electronic device 730. Through connection 710, for instance a personal identity number, address information, names, etc. of the user 712 can be obtained in a secure way. One way that can be used in the present method is to use the so-called "I Reveal My Attributes" (IRMA) application as developed by the Privacy by Design Foundation. The various examples of identification information are stored in the IRMA application on mobile phones, here the first electronic device 702. Access of the information requires the personal PIN number. Thereafter, and as shown in Fig. 8, the data can be shared through data connection 810 (e.g. in the first communication session) with party 722 to second electronic device 704 in a stand-alone way, where no contact between the second electronic device 704 or the first electronic device 702 and the third electronic device 730 is required. The present disclosure preferably relies and builds on the presence of an application similar to, or identical to, the IRMA application.

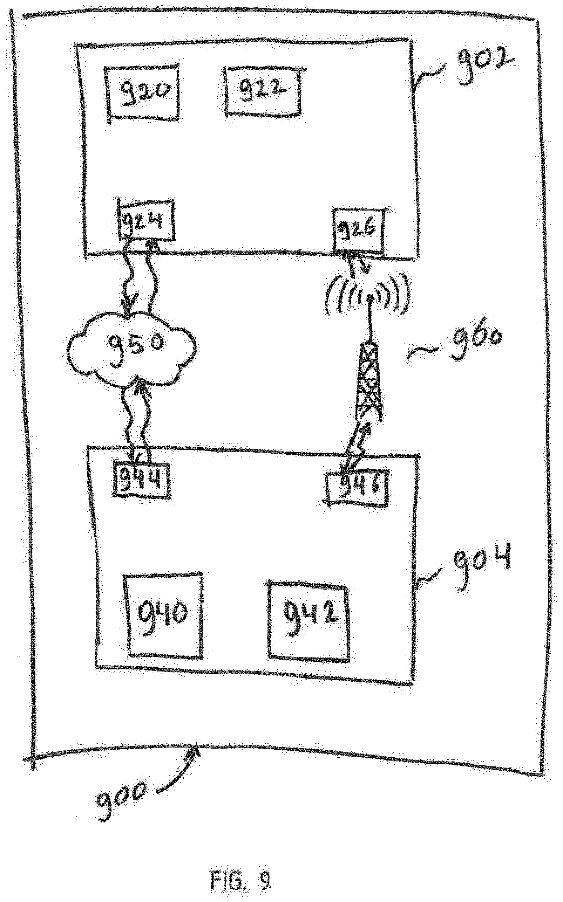

Fig. 9 shows a system 900 comprising a first electronic device 902 configured to communicate with a second electronic device 904 in a first and a second communication session, wherein the first communication session is a data communication session via the internet 950. The electronic device comprises a first communication interface 924 configured to communicate in the first communication session. The first communication interface 924 may also communicate in the second communication session, e.g. when the second communication session is a chat session.

Optionally, there may be provided a second communication interface 926 that here communicates in a telephone network 960 and can contact second electronic device 904 via telephone for establishing the second communication session.

The first electronic device 902 may comprise a memory 920 configured to store the identification information for identifying the first electronic device 902 and an identifier or token for identifying the first electronic device 902 over the second communication session. The first electronic device 902 further comprises a processor 922 configured to perform the above noted method steps.

The system 900 further comprises the second electronic device 904 configured to communicate with the first electronic device 902 via a first and a second communication session. The second electronic device comprises a first communication interface 944 configured to communicate in the first communication session via the internet 950.

Optionally, there may be provided a second communication interface 946 that here communicates in a telephone network 960 and can communicate with first electronic device 902 via telephone for establishing the second communication session. It will be understood that the second electronic device 904 can be a system of devices, e.g. comprising a web server and a telephone call server used in a call centre. The latter call server may comprise the second communication interface 946.

The second electronic device comprises a memory 940 configured to store the identification information for identifying the first electronic device and the identifier or token for identifying the first electronic device 902 over the second communication session.

The second electronic device 904 may further comprise a processor 942 configured to perform the above noted steps. In addition, the processor 942 may be configured to generate the identifier or token such that it allows the processor 942 to identify the first electronic device 902. The identifier or token may thus be generated to uniquely identify the first electronic device 902. It may also be selected from a pool, such as a pool of telephone numbers, as long as there are more telephone numbers than electronic devices contacting the second electronic device. There may also be much more telephone numbers (e.g. 10x or 100x) such that some device trying to pretend to be the first electronic device has less chance of knowing what that number is.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "units", "processors" or "modules", may be provided through the use of dedicated hardware as well as hardware capable of executing software such as firmware in association with appropriate software. When provided by a processor, the functions may be provided by a single dedicated processor, by a single shared processor, or by a plurality of individual processors, some of which may be shared. Moreover, explicit use of the term "unit", "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The disclosure further comprises the following embodiments.
1. Method for verifying that a first and a second communication session are both a communication session between the same first electronic device and a second electronic device, wherein the first communication session is a data communication session via the internet, the method comprising:
   - transmitting, by the first electronic device in the first communication session, identification information for identifying the first electronic device to the second electronic device;
   - receiving, by the second electronic device in the first communication session, of the transmitted identification information;
   - transmitting, by the second electronic device to the first electronic device in the first communication session, of an identifier or token for identifying the first electronic device over the second communication session;
   - receiving, by the first electronic device, of the identifier or token; and
   - using, by the first electronic device, of the identifier or token in the second communication session such that the second electronic device is enabled to verify that the second electronic device is connected to the first electronic device in the second communication session,
   wherein the second electronic device only verifies that the second electronic device is connected to the first electronic device in the second communication session when the first electronic device uses the identifier or token within a predetermined time period after the second electronic device has transmitted the identifier or token to the first electronic device.
2. Method according to embodiment 1, wherein the transmitting, by the second electronic device to the first electronic device in the first communication session comprises transmitting address data of the second electronic device to the first electronic device, wherein the address data is configured to allow the first electronic device to initiate the second communication session with the second electronic device, the method further comprising
   initiating, by the first electronic device, the second communication session using the address data.
3. Method according to embodiment 2, wherein the second communication session is a telephone communication session, wherein the address data is a first telephone number for reaching the second electronic device, wherein the first electronic device initiates the second communication session using the first telephone number for reaching the second electronic device.
4. Method according to embodiment 3, wherein the second electronic device selects the first telephone number from a plurality of telephone numbers such that the first telephone number is assigned to only the first electronic device.
5. Method according to embodiment 3 or 4, wherein the identification information comprises a second telephone number of the first electronic device, wherein the first electronic device initiates the second communication session using the second telephone number,
   wherein preferably the second electronic device only allows the second communication session to be established when the second telephone number used in the second communication session matches the second telephone number of the received identification information.
6. Method according to embodiment 5, wherein the second telephone number is a verified telephone number that is preferably verified by the second electronic device using short message service, SMS, verification.
7. Method according to any one of embodiments 1-6, wherein the predetermined time period is at most 2 minutes, preferably 1 minute.
8. Method according to any one of the preceding embodiments, wherein the identity information comprises a personal identity number of a user of the first electronic device, wherein the personal identity number is issued by a government agency, the method comprising receiving, by the first electronic device, of the personal identity number from a third electronic device in a third communication session, wherein the third electronic device is associated with and/or controlled by the government agency.
9. Method according to any one of the preceding embodiments, wherein the identifier or token comprises a code portion selected by the second electronic device, wherein the code portion is selected such that the first electronic device is identifiable by the code portion, wherein the using, by the first electronic device, of the identifier or token in the second communication session comprises transmitting the code portion to the second electronic device.
10. Method according to embodiment 9, wherein the code portion is comprised of DTMF keypad values, wherein the first electronic device uses the identifier or token by transmitting the code portion to the second electronic device as DTMF tones, wherein preferably the DTMF keypad values include at least one of a numerical value, a star, "*", and a number sign, "#", or any combination thereof.
11. Method according to embodiment 10, wherein the DTMF keypad values comprise at least six keypad values which are transmitted by the first electronic device to the second electronic device in the second communication session within a predefined time period of at most 10 seconds, preferably at most 5 seconds.
12. Method according to any one of the preceding embodiments, further comprising:
   - obtaining, by the second electronic device in the second communication session, of the used identifier or token;
   - comparing the used identifier or token with the identifier or token transmitted to the first electronic device in the first communication session; and
   - when the received identifier or token is identical to the identifier or token transmitted to the first electronic device in the first communication session, verifying that the first electronic device is the same as the first electronic device.
13. Method according to embodiment 12, wherein using, by the first electronic device, of the identifier or token in the second communication session comprises transmitting the identifier or token to the second electronic device, wherein the obtaining comprises receiving, by the second electronic device in the second communication session, of the transmitted identifier or token.
14. Method according to any one of the preceding embodiments, further comprising transmitting, by the first electronic device in the second communication session, of the identification information for identifying the first electronic device to the second electronic device.
15. Method according to any one of the preceding embodiments, further comprising, before the step of transmitting the identifier or token in the second communication session, transmitting a connection request to the second electronic device for establishing the second communication session between the first and second electronic devices.
16. Method according to any one of the preceding embodiments, wherein the first electronic device is a mobile phone.
17. Method according to any one of the preceding embodiments, wherein preferably in the first communication session a first protocol and a first transport layer are used, wherein in the second communication session a second protocol and a second transport layer are used, wherein the first protocol is different from the second protocol and/or the first transport layer is different from the second transport layer,
   wherein preferably:
   the first transport layer is a TCP or UDP transport layer; and/or
   the first protocol is a TCP or UDP protocol, and wherein the second protocol is a dual-tone multi-frequency, DTMF, protocol.
18. Method according to any one of the preceding embodiments, wherein the first communication session is a UDP or TCP based communication session.
19. Method according to any one of the preceding embodiments, wherein in the second communication session is a chat session, wherein preferably the second communication session uses a protocol that is, or is based on, the extensible messaging and presence protocol, XMPP.
20. System for verifying that a first and a second communication session are both a communication session between the same first electronic device and a second electronic device, wherein the first communication session is a data communication session via the internet, the system comprising the first electronic device and the second electronic device, wherein:
   the first electronic device is configured to transmit, in the first communication session, identification information for identifying the first electronic device to the second electronic device;
   the second electronic device is configured to
      - receive, in the first communication session, the transmitted identification information, and in response thereto
      - transmit, to the first electronic device in the first communication session, an identifier or token for identifying the first electronic device over the second communication session; and
   the first electronic device is further configured to:
      - receive the identifier or token, and to
      - use the received identifier or token in the second communication session such that the second electronic device is enabled to verify that the second electronic device is connected to the first electronic device in the second communication session,
   wherein the second electronic device only verifies that that the second electronic device is connected to the first electronic device in the second communication session when the first electronic device uses the identifier or token within a predetermined time period after the second electronic device has transmitted the identifier or token to the first electronic device.
21. Electronic device configured to communicate with a second electronic device via a first and a second communication session, wherein the first communication session is a data communication session via the internet, the electronic device comprising:
   - at least one communication interface configured to communicate in the first communication session and the second communication session;
   - a memory configured to store identification information for identifying the electronic device and an identifier or token for identifying the electronic device over the second communication session;
   - a processor configured to:
      - transmit, via the first communication interface, identification information for identifying the first electronic device to the second electronic device;
      - receive, via the first communication interface, the identifier or token from the second electronic device; and
      - use the identifier or token in the second communication session such that the second electronic device is enabled to verify that the second electronic device is connected to the first electronic device in the second communication session, wherein the first electronic device is configured to only use the identifier or token in the second communication session within a predetermined time period after receipt of the identifier or token from the second electronic device.
22. Electronic device configured to communicate with a first electronic device via a first and a second communication session, wherein the electronic device is a second electronic device, wherein the first communication session is a data communication session via the internet, the electronic device comprising:
   - at least one communication interface configured to communicate in the first communication session and the second communication session;
   - a memory configured to store identification information for identifying the first electronic device and an identifier or token for identifying the first electronic device over the second communication session;
   - a processor configured to:
      - receive, via the first communication interface from the first electronic device, the transmitted identification information;
      - transmit, via the first communication interface to the first electronic device, an identifier or token for identifying the first electronic device over the second communication session;
   - obtain, via the second communication interface, the identifier or token from the first electronic device such that that the second electronic device is enabled to verify that the second electronic device is connected to the first electronic device in the second communication session, wherein the second electronic device is configured to only verify that the second electronic device is connected to the first electronic device in the second communication session when the identifier or token is obtained within a predetermined time period after transmission of the identifier or token to the first electronic device.
23. System comprising a first electronic device and a second electronic device, the first electronic device being the electronic device according to embodiment 20 and the second electronic device being the electronic device according to embodiment 21.
24. Computer program product comprising computer-executable instructions for performing, when executed on a computer, the steps of the method of any one of embodiments 1-19.

The description of the different illustrative configurations has been presented for purposes of illustration and description and is not intended to be exhaustive or limited to the configurations in the form disclosed. Many modifications and variations will be apparent to those of ordinary skill in the art. Further, different illustrative configurations may provide different features as compared to other illustrative configurations. The configuration or configurations selected are chosen and described in order to best explain the principles of the configurations, the practical application, and to enable others of ordinary skill in the art to understand the disclosure for various configurations with various modifications as are suited to the particular use contemplated.

## Claims

1. Method (100, 200) for verifying that a first and a second communication session are both a communication session between the same first electronic device (202, 402, 702, 902) and a second electronic device (204, 704, 904), wherein the first communication session is a data communication session via the internet, the method comprising:
- transmitting (110, 210), by the first electronic device (202, 402, 702, 902) in the first communication session, identification information for identifying the first electronic device (202, 402, 702, 902) to the second electronic device (204, 704, 904);
- receiving (120), by the second electronic device (204, 704, 904) in the first communication session, of the transmitted identification information;
- transmitting (130), by the second electronic device (204, 704, 904) to the first electronic device (202, 402, 702, 902) in the first communication session, of an identifier or token for identifying the first electronic device (202, 402, 702, 902) over the second communication session;
- receiving (140, 230), by the first electronic device (202, 402, 702, 902), of the identifier or token; and
- using (150, 250), by the first electronic device (202, 402, 702, 902), of the identifier or token in the second communication session such that the second electronic device (204, 704, 904) is enabled to verify that the second electronic device (204, 704, 904) is connected to the first electronic device (202, 402, 702, 902) in the second communication session,
wherein the second electronic device (204, 704, 904) only verifies (180) that the second electronic device (204, 704, 904) is connected to the first electronic device (202, 402, 702, 902) in the second communication session when the first electronic device (202, 402, 702, 902) uses the identifier or token within a predetermined time period (254) after the second electronic device (204, 704, 904) has transmitted the identifier or token to the first electronic device (202, 402, 702, 902).

2. Method according to claim 1, wherein the transmitting (130), by the second electronic device (204, 704, 904) to the first electronic device (202, 402, 702, 902) in the first communication session comprises transmitting address data of the second electronic device (204, 704, 904) to the first electronic device (202, 402, 702, 902), wherein the address data is configured to allow the first electronic device (202, 402, 702, 902) to initiate the second communication session with the second electronic device (204, 704, 904), the method further comprising
initiating (250), by the first electronic device (202, 402, 702, 902), the second communication session using the address data.

3. Method according to claim 2, wherein the second communication session is a telephone communication session, wherein the address data is a first telephone number for reaching the second electronic device (204, 704, 904), wherein the first electronic device (202, 402, 702, 902) initiates (250) the second communication session using the first telephone number for reaching the second electronic device (204, 704, 904),
wherein preferably the second electronic device (204, 704, 904) selects the first telephone number from a plurality of telephone numbers such that the first telephone number is assigned to only the first electronic device (202, 402, 702, 902).

4. Method according to claim 3, wherein the identification information comprises a second telephone number of the first electronic device (202, 402, 702, 902), wherein the first electronic device (202, 402, 702, 902) initiates the second communication session using the second telephone number,
wherein preferably the second electronic device (204, 704, 904) only allows the second communication session to be established when the second telephone number used in the second communication session matches the second telephone number of the received identification information,
wherein preferably the second telephone number is a verified telephone number that is preferably verified by the second electronic device (204, 704, 904) using short message service, SMS, verification.

5. Method according to any one of claims 1-4, wherein:
the predetermined time period (254) is at most 2 minutes, preferably 1 minute; and/or
the identity information comprises a personal identity number of a user (712) of the first electronic device (202, 402, 702, 902), wherein the personal identity number is issued by a government agency (732), the method comprising receiving, by the first electronic device (202, 402, 702, 902), of the personal identity number from a third electronic device (730) in a third communication session, wherein the third electronic device (730) is associated with and/or controlled by the government agency (732).

6. Method according to any one of the preceding claims, wherein the identifier or token comprises a code portion selected by the second electronic device (204, 704, 904), wherein the code portion is selected such that the first electronic device (202, 402, 702, 902) is identifiable by the code portion, wherein the using, by the first electronic device (202, 402, 702, 902), of the identifier or token in the second communication session comprises transmitting the code portion to the second electronic device (204, 704, 904),
wherein preferably the code portion is comprised of DTMF keypad values (422), wherein the first electronic device (202, 402, 702, 902) uses the identifier or token by transmitting the code portion to the second electronic device (204, 704, 904) as DTMF tones,
wherein preferably the DTMF keypad values (422) include at least one of a numerical value, a star, "*", and a number sign, "#", or any combination thereof, wherein preferably the DTMF keypad values (422) comprise at least six keypad values which are transmitted by the first electronic device (202, 402, 702, 902) to the second electronic device (204, 704, 904) in the second communication session within a predefined time period (254) of at most 10 seconds, preferably at most 5 seconds.

7. Method according to any one of the preceding claims, further comprising:
- obtaining, by the second electronic device (204, 704, 904) in the second communication session, of the used identifier or token;
- comparing the used identifier or token with the identifier or token transmitted to the first electronic device (202, 402, 702, 902) in the first communication session; and
- when the received identifier or token is identical to the identifier or token transmitted to the first electronic device (202, 402, 702, 902) in the first communication session, verifying that the first electronic device (202, 402, 702, 902) is the same as the first electronic device (202, 402, 702, 902),
wherein, preferably, using, by the first electronic device (202, 402, 702, 902), of the identifier or token in the second communication session comprises transmitting the identifier or token to the second electronic device (204, 704, 904), wherein the obtaining comprises receiving, by the second electronic device (204, 704, 904) in the second communication session, of the transmitted identifier or token.

8. Method according to any one of the preceding claims,
further comprising transmitting, by the first electronic device (202, 402, 702, 902) in the second communication session, of the identification information for identifying the first electronic device (202, 402, 702, 902) to the second electronic device (204, 704, 904); and/or
further comprising, before the step of transmitting the identifier or token in the second communication session, transmitting a connection request to the second electronic device (204, 704, 904) for establishing the second communication session between the first and second electronic device (204, 704, 904)s; and/or
wherein the first electronic device (202, 402, 702, 902) is a mobile phone.

9. Method according to any one of the preceding claims, wherein in the first communication session a first protocol and a first transport layer are used, wherein in the second communication session a second protocol and a second transport layer are used, wherein the first protocol is different from the second protocol and/or the first transport layer is different from the second transport layer,
wherein preferably:
the first transport layer is a TCP or UDP transport layer; and/or
the first protocol is a TCP or UDP protocol, and wherein the second protocol is a dual-tone multi-frequency, DTMF, protocol; and/or
wherein the first communication session is a UDP or TCP based communication session.

10. Method according to any one of the preceding claims, wherein in the second communication session is a chat session, wherein preferably the second communication session uses a protocol that is, or is based on, the extensible messaging and presence protocol, XMPP.

11. System (900) for verifying that a first and a second communication session are both a communication session between the same first electronic device (202, 402, 702, 902) and a second electronic device (204, 704, 904), wherein the first communication session is a data communication session via the internet, the system comprising the first electronic device (202, 402, 702, 902) and the second electronic device (204, 704, 904), wherein:
the first electronic device (202, 402, 702, 902) is configured to transmit, in the first communication session, identification information for identifying the first electronic device (202, 402, 702, 902) to the second electronic device (204, 704, 904);
the second electronic device (204, 704, 904) is configured to
- receive, in the first communication session, the transmitted identification information, and in response thereto
- transmit, to the first electronic device (202, 402, 702, 902) in the first communication session, an identifier or token for identifying the first electronic device (202, 402, 702, 902) over the second communication session; and
the first electronic device (202, 402, 702, 902) is further configured to:
- receive the identifier or token, and to
- use the received identifier or token in the second communication session such that the second electronic device (204, 704, 904) is enabled to verify that the second electronic device (204, 704, 904) is connected to the first electronic device (202, 402, 702, 902) in the second communication session,
wherein the second electronic device (204, 704, 904) only verifies that that the second electronic device (204, 704, 904) is connected to the first electronic device (202, 402, 702, 902) in the second communication session when the first electronic device (202, 402, 702, 902) uses the identifier or token within a predetermined time period (254) after the second electronic device (204, 704, 904) has transmitted the identifier or token to the first electronic device (202, 402, 702, 902).

12. Electronic device (202, 402, 702, 902) configured to communicate with a second electronic device (204, 704, 904) via a first and a second communication session, wherein the first communication session is a data communication session via the internet, the electronic device comprising:
- at least one communication interface configured to communicate in the first communication session and the second communication session;
- a memory configured to store identification information for identifying the electronic device and an identifier or token for identifying the electronic device over the second communication session;
- a processor configured to:
- transmit, via the first communication interface, identification information for identifying the first electronic device (202, 402, 702, 902) to the second electronic device (204, 704, 904);
- receive, via the first communication interface, the identifier or token from the second electronic device (204, 704, 904); and
- use the identifier or token in the second communication session such that the second electronic device (204, 704, 904) is enabled to verify that the second electronic device (204, 704, 904) is connected to the first electronic device (202, 402, 702, 902) in the second communication session, wherein the first electronic device (202, 402, 702, 902) is configured to only use the identifier or token in the second communication session within a predetermined time period (254) after receipt of the identifier or token from the second electronic device (204, 704, 904).

13. Electronic device (204, 704, 904), configured to communicate with a first electronic device (202, 402, 702, 902) via a first and a second communication session, wherein the electronic device is a second electronic device (204, 704, 904), wherein the first communication session is a data communication session via the internet, the electronic device comprising:
- at least one communication interface configured to communicate in the first communication session and the second communication session;
- a memory configured to store identification information for identifying the first electronic device (202, 402, 702, 902) and an identifier or token for identifying the first electronic device (202, 402, 702, 902) over the second communication session;
- a processor configured to:
- receive, via the first communication interface from the first electronic device (202, 402, 702, 902), the transmitted identification information;
- transmit, via the first communication interface to the first electronic device (202, 402, 702, 902), an identifier or token for identifying the first electronic device (202, 402, 702, 902) over the second communication session;
- obtain, via the second communication interface, the identifier or token from the first electronic device (202, 402, 702, 902) such that that the second electronic device (204, 704, 904) is enabled to verify that the second electronic device (204, 704, 904) is connected to the first electronic device (202, 402, 702, 902) in the second communication session, wherein the second electronic device (204, 704, 904) is configured to only verify that the second electronic device (204, 704, 904) is connected to the first electronic device (202, 402, 702, 902) in the second communication session when the identifier or token is obtained within a predetermined time period (254) after transmission of the identifier or token to the first electronic device (202, 402, 702, 902).

14. System comprising a first electronic device (202, 402, 702, 902) and a second electronic device (204, 704, 904), the first electronic device (202, 402, 702, 902) being the electronic device according to claim 12 and the second electronic device (204, 704, 904) being the electronic device according to claim 13.

15. Computer program product comprising computer-executable instructions for performing, when executed on a computer, the steps of the method of any one of claims 1-10.
